# EUROPEAN PATENT SPECIFICATION

(11) **EP 4 470 878 B1**
(45) Date of publication and mention of the grant of the patent: **21.01.2026**
(21) Application number: 23176072.9
(22) Date of filing: 30.05.2023
(51) Int. Cl.: B62D 6/00, B62D 6/06, B62D 17/00, B60G 17/016, B60G 17/0195

(54) **APPARATUS FOR AND METHOD OF CONTROLLING STEER-BY-WIRE SYSTEM**
VORRICHTUNG UND VERFAHREN ZUR STEUERUNG EINES STEER-BY-WIRE-SYSTEMS
APPAREIL ET PROCÉDÉ DE COMMANDE DE SYSTÈME DE DIRECTION PAR CÂBLE

(43) Date of publication of application: 04.12.2024
(73) Proprietor: Hyundai Mobis Co., Ltd., Gangnam-gu Seoul 06141 (KR)
(72) Inventor: DIALYNAS, Georgios, 65760 Eschborn (DE)
(74) Representative: Frenkel, Matthias Alexander

(56) References cited:
- JP-A- 2014 000 915
- US-A1- 2006 080 015
- US-B2- 6 799 105
- US-B2- 9 919 736

## Description

### BACKGROUND

### FIELD

Exemplary embodiments of the present disclosure relate to an apparatus for and a method of controlling a steer-by-wire system and, more particularly, to an apparatus for and a method of controlling a steer-by-wire system, the apparatus and the method being capable of aligning a wheel by computing a toe change due to bump steer occurring in the steer-by-wire system.

### DISCUSSION OF THE BACKGROUND

When a driver operates a steering wheel, a motor-operated steering apparatus of a vehicle operates to change directions of wheels. Accordingly, a traveling direction of the vehicle changes.

In recent years, there has been an increase in the number of vehicles in which a steer-by-wire (SBW) system is installed as a steering apparatus.

The steer-by-wire (SBW) system of the vehicle is a system in which vehicle steering is performed with only a motor without any mechanical linkage, such as a column, between a steering wheel and a vehicle wheel.

This system is configured with a steering force actuator (SFA) for providing a repulsive force to the driver and a road wheel actuator (RWA) for steering.

Among these steer-by-wire systems, particularly, an independent-type steer-by-wire system is a system in which a left-side wheel steering apparatus and a right-side wheel steering apparatus operate independently of each other without any mechanical linkage therebetween. This type of steer-by-wire system provides not only the advantage of decreasing the number of components and realizing a reduction in weight, but also the advantage of being driven with a motor only if necessary and thus improving fuel efficiency.

Bump steer refers to a phenomenon where vehicle wheels steer itself as it moves through the suspension stroke.

The bump steer enables the vehicle to turn itself when one wheel hits a bump or falls down into a hole or rut. Excessive bump steer increases tire wear and makes the vehicle more difficult to handle on rough roads.

A steering system in the related art sets toe alignment in a mechanical or by-wire manner and does not take into consideration a real-time steering angle and dynamic characteristics of a suspension and a steering rack in order to eliminate the bump steer.

In order to minimize this effect, in most mechanical steering systems, for example, an operation of changing the height of one end of a steering tie rod is allowed, but there occurs a problem in that active configuration is not possible with suspension dynamics and other input functions.

A steering ratio between left-side and right-side wheel angles is uniformly maintained because the steering geometry is fixed. Thus, there occurs a problem in that the vehicle drives less dynamically in a specific driving environment.

Particularly, in the steer-by-wire system, in a case where a front left-side wheel rolls over a bump, a suspension to the corresponding side is compressed, and the vehicle automatically turns to the left side (toe-out). Thus, there occurs a problem in that the vehicle instantaneously turns to the left side without an input by the steering wheel.

Examples of the related art include Korean Patent No. 10-1509801 entitled "Independent Steer by Wire System."

JP 2014 000915 A discloses a steering apparatus for vehicles wherein stable turning characteristics are obtained by decreasing the error between the actual tire angle and the tire angle estimated from the movement amount of the steering shaft. When expansion or contraction of suspension is detected, the tire angle is corrected according to the rolling steer characteristics.

US 2006/080015 A1 discloses a method for measuring and compensating steered-angle sensitive wheel alignment angle and distance measurements for the effects of steering a wheel from a straight ahead position, thereby enabling an operator to carry out a vehicle wheel alignment angle adjustment without having to maintain a wheel in a straight-ahead steered condition during an alignment angle or distance adjustment.

US 6 799 105 B2 discloses a method of controlling a variable steering ratio of a vehicle steer-by-wire system by applying fuzzy logic technology.

US 9 919 736 B2 discloses an adaptive steering control apparatus that continuously independently adjusts the steering angle of each of the steerable wheels of a vehicle. The controller also calculates toe angle adjustments for each of the right wheel steering portion and the left wheel steering portion, and the right wheel steering portion and the left wheel steering portion, partly in response to determining a load on each of the wheels based on signals from the suspension deflection/ load sensors.

### SUMMARY

Various embodiments are directed to an apparatus for and a method of controlling a steer-by-wire system, the apparatus and the method being directed to steering control of an independent front wheel steering system, among steer-by-wire systems, and being capable of adjusting respective steering angles of wheels, correcting bump steer, and performing toe alignment, taking into consideration a real-time steering angle and dynamic characteristics of a suspension and a rack.

An apparatus for and a method of controlling a steer-by-wire system according to the present invention are set forth in the independent claims. Preferred embodiments are provided in the dependent claims. The apparatus includes: a steering angle sensor configured to measure a steering angle that is formed when operating a steering wheel; wheel angle sensors installed on a left-side wheel and a right-side wheel, respectively, and configured to measure wheel angles, respectively; a suspension deflection sensor configured to measure a movement in a vertical direction of a suspension; and a processor configured to determine the movement of the suspension in a manner that corresponds to a value resulting from the measurement by the suspension deflection sensor, to determine toe changes to the left-side wheel and the right-side wheel on the basis of movements of the left-side wheel and the right-side wheel in a case where the movement of the suspension is determined, and to correct a left-side wheel angle and a right-side wheel angle.

According to the invention, the processor determines the toe changes by comparing the left-side wheel angle and the right-side wheel angle that are measured by the wheel angle sensors, respectively, with estimated values, respectively, that are computed on the basis of the steering angle measured by the steering angle sensor and on the basis of the steering ratio.

According to the invention, when the left-side wheel angle is consistent with the estimated value of the left-side wheel angle and the right-side wheel angle is consistent with the estimated value of the right-side wheel angle, the processor determines that the left-side and right-side wheel angles are normal, and when the left-side wheel angle is not consistent with the estimated value of the left-side wheel angle or the right-side wheel angle is not consistent with the estimated value of the right-side wheel angle, the processor corrects the toe changes.

According to the invention, the processor computes each of the estimated value of the left-side wheel angle and the estimated value of the right-side wheel angle by multiplying the steering angle measured by the steering angle sensor by a predetermined steering ratio.

In an embodiment, the processor may compute correction values for the left-side wheel angle and the right-side wheel angle in such a manner as to correspond to the toe changes, respectively, to the left-side wheel and the right-side wheel.

In an embodiment, the processor may transmit the correction values to actuators, respectively, on the left-side wheel and the right-side wheel, and the actuators may perform the toe alignment.

In an embodiment of a method of controlling a steer-by-wire system, the method includes: measuring, by a steering sensor, a steering angle that is formed when operating a steering wheel; measuring, by wheel angle sensors installed on a left-side wheel and a right-side wheel, respectively, wheel angles, respectively; measuring, by a suspension deflection sensor, a movement in a vertical direction of a suspension; determining, by a processor, the movement of the suspension in a manner that corresponds to a value resulting from the measurement by the suspension deflection sensor; determining, by the processor, toe changes to the left-side wheel and the right-side wheel on the basis of movements of the left-side wheel and the right-side wheel in a case where the movement of the suspension is determined; and correcting, by the processor, a left-side wheel angle and a right-side wheel angle.

According to the invention, in the determining by the processor of the toe changes to the left-side wheel and the right-side wheel, the processor determines the toe changes by comparing the left-side wheel angle and the right-side wheel angle that are measured by the wheel angle sensors, respectively, with estimated values, respectively, that are computed on the basis of the steering angle measured by the steering angle sensor and on the basis of the steering ratio.

According to the invention, the correcting by the processor of the left-side wheel angle and the right-side wheel angle includes: determining, by the processor, that the left-side and right-side wheel angles are normal, when the left-side wheel angle is consistent with the estimated value of the left-side wheel angle and the right-side wheel angle is consistent with the estimated value of the right-side wheel angle; and correcting, by the processor, the toe changes, in a case where the left-side wheel angle is not consistent with the estimated value of the left-side wheel angle or where the right-side wheel angle is not consistent with the estimated value of the right-side wheel angle.

According to the invention, in the correcting by the processor of the left-side wheel angle and the right-side wheel angle, the processor computes each of the estimated value of the left-side wheel angle and the estimated value of the right-side wheel angle by multiplying the steering angle measured by the steering angle sensor by a predetermined steering ratio.

In an embodiment, , the correcting by the processor of the left-side wheel angle and the right-side wheel angle may include computing, by the processor, correction values for the left-side wheel angle and the right-side wheel angle in such a manner as to correspond to the toe changes, respectively, to the left-side wheel and the right-side wheel.

In an embodiment, the correcting by the processor of the left-side wheel angle and the right-side wheel angle may include transmitting, by the processor, the correction values to actuators, respectively, on the left-side wheel and the right-side wheel and performing, by the actuators, the toe alignment.

According to an aspect of the present disclosure, the apparatus for controlling a steer-by-wire system is capable of adjusting respective steering angles of wheels and correcting the toe changes due to the bump steer, taking into consideration the real-time steering angles and dynamic characteristics of a suspension and a rack. Thus, ride quality and steering precision can be improved by minimizing an influence of the uneven road surface.

According to another aspect of the present disclosure, the frequency with which damage to a front wheel steering and the suspension occurs can be reduced by individually controlling each of the vehicles.

According to still another aspect of the present disclosure, the toe changes can be minimized in a situation where the wheels are under different loads, the operation of the steering wheel can be readily performed during cornering, and fuel efficiency can be improved with less tire wear.

### BRIEF DESCRIPTION OF THE DRAWINGS

FIG. 1 is a block diagram schematically illustrating a configuration of an apparatus for controlling a steer-by-wire system according to an embodiment of the present disclosure.
FIGS. 2A, 2B, and 2C are views that are referred to for description of vehicle wheel alignment according to the embodiment of the present disclosure.
FIG. 3 is a view that is referred to for description of a method in which the apparatus for controlling a steer-by-wire system according to the embodiment of the present disclosure controls bump steer.
FIG. 4 is a flowchart illustrating a method in which the control apparatus for the steer-by-wire system according to the embodiment of the present disclosure controls deflection of a front suspension.
FIG. 5 is a flowchart illustrating a method in which the apparatus for controlling a steer-by-wire system according to the embodiment of the present disclosure corrects the bump steer and performs toe alignment.

### DETAILED DESCRIPTION OF THE ILLUSTRATED EMBODIMENTS

Hereinafter, an apparatus for and a method of controlling a steer-by-wire system will be described below with reference to the accompanying drawings through various exemplary embodiments.

For clarity and convenience in description, thicknesses of lines, sizes of constituent elements, and the like may be illustrated in non-exact proportion in the drawings. In addition, terms defined by considering their respective meanings in the present disclosure will be used below and may vary according to the user's or manager's intention or according to practices in the art. Therefore, the terms should be defined in context in light of the present specification.

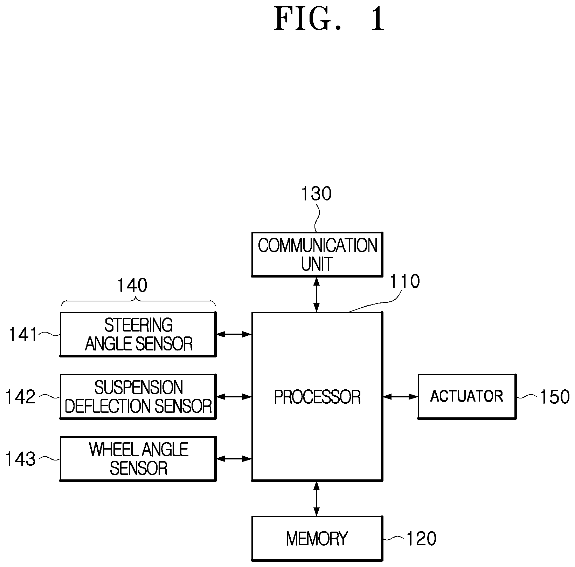

FIG. 1 is a block diagram schematically illustrating a configuration of an apparatus for controlling a steer-by-wire system according to an embodiment of the present disclosure.

As illustrated in FIG. 1, the apparatus for controlling a steer-by-wire system includes a communication unit 130, a sensor 140, an actuator 150, a memory 120, and a processor 110.

In this case, the steer-by-wire system includes a steering force actuator (SFA) (not illustrated) that is connected to steering wheels (not illustrated) and generates a repulsive force, and a road wheel actuator (RWA) (not illustrated) that controls a wheel and thus controls a traveling direction.

A first steering angle sensor (not illustrated) that measures a steering angle that varies when operating the steering wheel, and a first motor (not illustrated) are connected to the SFA.

The RWA includes a drive shaft (not illustrated) that is connected to the wheels, a rack (not illustrated) formed on the drive shaft, a steering gear (not illustrated), and a second motor (not illustrated) that controls the steering gear. In response to a signal of the SFA, the RWA controls the steering gear through the second motor and thus adjusts angles of the wheels, thereby controlling the traveling direction.

In the case of an independent front wheel system (IFWS), a left-side wheel and a right-side wheel operate independently of each other. Accordingly, the RWA is also configured to control each of the left-side wheel and the right-side wheel.

The sensors 140 include a steering angle sensor 141, a suspension deflection sensor 142, and a wheel angle sensor 143. The sensors 140 may include a plurality of steering angle sensors 141, a plurality of suspension deflection sensors 142, and a plurality of wheel angle sensors 143.

The steering angle sensor 141 includes the first steering angle sensor that is connected to the SFA and a second steering angle sensor that is connected to the RWA.

The first steering angle sensor measures the steering angle that is formed when operating the steering wheel, and the second steering angle sensor measures a steering angle that is adjusted by second motor.

The suspension deflection sensors 142 are installed on a plurality of wheels, respectively, and measure suspension deflection.

The wheel angle sensors 143 are installed on the plurality of wheels, respectively, and measure wheel angles, respectively.

The actuator 150 performs alignment on the left-side wheel and the right-side wheel.

When receiving a correction value from the processor 110, the actuator 150 correspondingly performs toe alignment on the left-side wheel and the right-side wheel. The actuators 150 may be installed on the left-side wheel and the right-side wheel, respectively.

Stored in the memory 120 are data that result from measurements by a plurality of sensors 140, reference data associated with steering control, control data for driving the first and second motors, and data for determining bump steer. In addition, stored in the memory 120 are data on a steering control algorithm, a bump steer elimination algorithm, and a toe alignment algorithm.

Examples of the memory 120 include storage devices, such as a non-volatile memory, such as a random access memory (RAM), a ROM, or an electrically erased programmable ROM (EEPROM), and a flash memory.

The communication unit 130 includes a driver for communication over a controller area network (CAN) and a driver for communication over a local interconnect network (LIN) and transmits and receives data.

In addition, the communication unit 130 may include a wired or wireless communication module and may communicate with a vehicle or an external terminal or server.

For example, the communication unit 130 performs communication through Wireless Access in vehicular environment (WAVE) for communication with a vehicle and roadside infrastructures and through vehicle to everything (V2X) technology for communication between vehicles. In addition, the communication unit 130 performs at least one of short-distance communication, which uses communication standards, such as Ethernet, WiFi, and Bluetooth, mobile communication, and serial communication.

The processor 110 generates the correction value on the basis of the steering angle, the suspension deflection, and the wheel angle that are measured by the plurality of sensors 140 and performs the toe alignment, thereby eliminating the influence of the bump steer.

The processor 110 computes each of a left-side wheel angle and the right-side wheel angle, and the IFWS performs the toe alignment on each of the wheels on the basis of the computed left-side wheel and right-side wheel angles.

The processor 110 corrects the bump steer, reduces the influence of the bump steer, and controls the steer-by-wire system through the toe alignment.

The processor 110 operates on a control algorithm stored in the memory 120 and thus controls the steer-by-wire system.

The processor 110 may include at least one micro-processor.

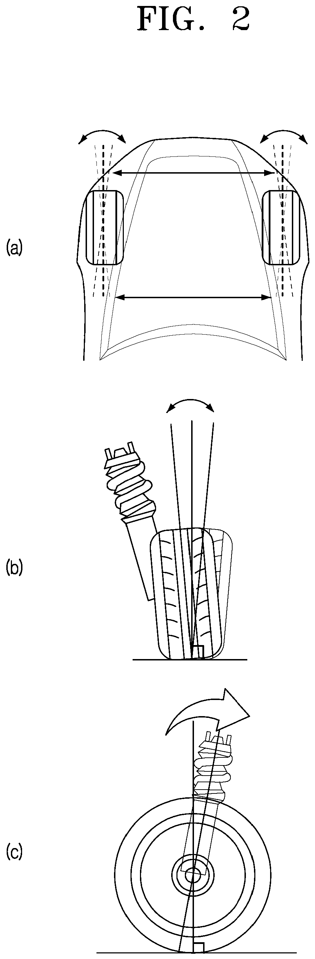

FIGS. 2A, 2B, and 2C are views that are referred to for description of vehicle wheel alignment according to the embodiment of the present disclosure.

As illustrated in FIG. 2A, toe alignment is an angle by which the left-side wheels or the right-side wheels turn inward or outward when viewed from above, and easily changes due to impact on the road surface.

Toe-out refers to a state where the left-side wheels or the right-side wheels are further apart at their front edges toward the forward direction than at their rear edges, and toe-in refers to a state where the left-side wheels or the right-side wheels are closer at their front edges toward the forward direction than at their rear edges. Toe-out and toe-in may have a significant effect on a vehicle that drives in a straight line. In the case of "toe-in," outside tread blocks of the wheel wears down more quickly in a circumferential direction. In the case of "toe-out," inside tread blocks of the wheel wears down more quickly in the circumferential direction.

As illustrated in FIG. 2, camber refers to a state where the wheel is inclined outward or inward when viewed from the front of the vehicle.

The state where the wheel is inclined inward refers to "negative camber," and the state where the wheel is inclined outward refers to "positive camber." The "negative camber" tightens a grip on the road surface during cornering and thus provides high cornering stability, but a tire may be unevenly worn when the vehicle drives in a straight line. The "positive camber" provides insufficient corner stability, but provides the advantage of easily steering the wheels with less force. Thus, the "positive camber" may be mostly applied to an off-road vehicle or an agricultural vehicle.

As illustrated in FIG 2C, caster refers to an angle by which a front suspension is inclined when the vehicle wheel is viewed from the side.

The more increased a "positive caster" angle, the more increased the likelihood of understeer. Conversely, the more a "negative caster" angle, the more increased the likelihood of oversteer. Excessive positive caster provides high stability at a high speed, but may make it difficult to perform a steering operation.

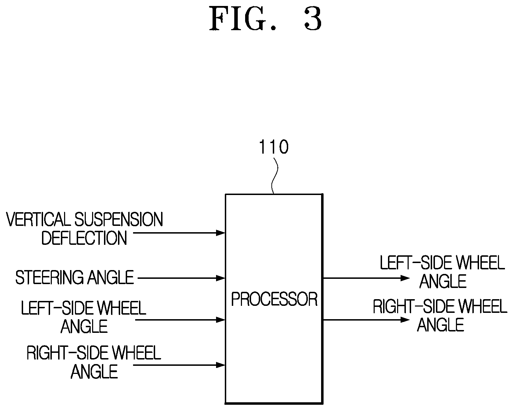

FIG. 3 is a view that is referred to for description of a method in which the apparatus for controlling a steer-by-wire system according to the embodiment of the present disclosure controls the bump steer.

As illustrated in FIG. 3, the processor 110 performs the toe alignment by correcting positions of the left-side wheel and the right-side wheel, in a manner that corresponds to the bump steer that occurs when the vehicle drives around a corner or occurs due to a bump, a fork hole, or the like on the uneven road surface.

The processor 110 measures a toe change due to the bump steer through the suspension deflection sensor 142, the wheel angle sensor 143, and the steering angle sensor 141.

The processor 110 computes each of the estimated wheel angles of the left-side wheel and the right-side wheel on the basis of vertical deflection of the suspension that is measured by the suspension deflection sensor 142, the steering angle that is measured by the steering angle sensor 141 and the left-side wheel angle and the right-side wheel angle that are measured by the wheel angle sensors 143, respectively.

The steering angle here is a steering angle, measured by the steering angle sensor 141 of the SFA, that is formed when operating the steering wheel.

The processor 110 computes the correction value by comparing a currently measured wheel angle with a computed estimated value and performs the toe alignment in a manner that corresponds to the correction value.

Accordingly, the processor 110 corrects movements of the left-side wheel and the right-side wheel due to the bump steer.

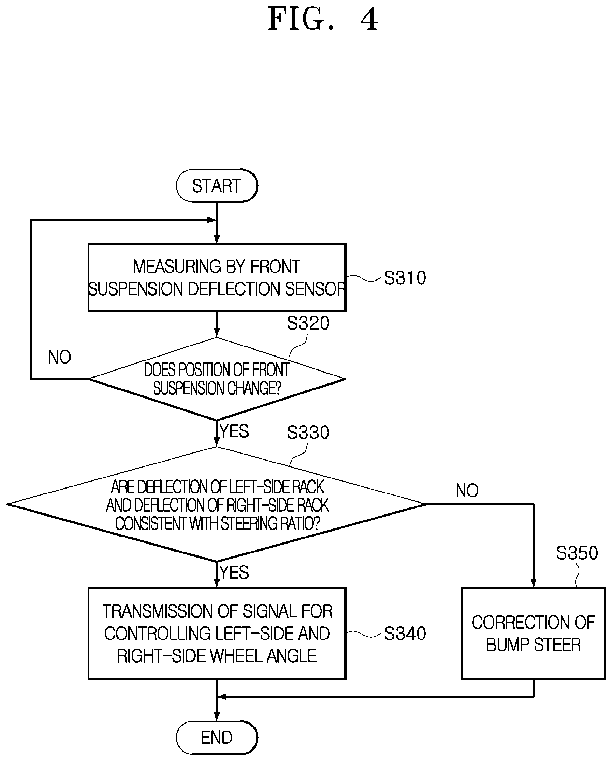

FIG. 4 is a flowchart illustrating a method in which the apparatus for controlling a steer-by-wire system according to the embodiment of the present disclosure controls deflection of a front suspension deflection.

As illustrated in FIG. 4, the processor 110 computes a value of vertical deflection of the front suspension that is measured by the suspension deflection sensor 142 (S310).

In a case where the value of the vertical deflection of the front suspension is not 0, that is, in a case where a position of the front suspension changes in a vertical direction, the processor 110 determines whether or not deflection of a left-side rack and deflection of a right-side rack are consistent with a steering ratio (S330).

The processor 110 transmits a signal of controlling left-side and right side wheel angles to each of the actuators (S340).

That is, in a case where the deflection of the left-side rack and the deflection of the right-side rack are consistent with the steering ratio, the processor 110 controls the RWA by applying the signal for controlling the left-side and right side wheel angles thereto.

In a case where the deflection of the left-side rack and the deflection of the right-side rack are not consistent with the steering ratio, the processor 110 corrects the bump steer (S350).

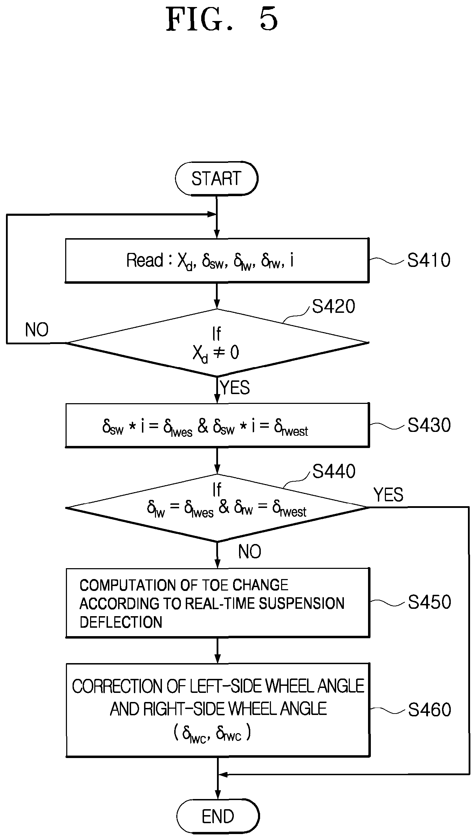

FIG. 5 is a flowchart illustrating a method in which the apparatus for controlling a steer-by-wire system according to the embodiment of the present disclosure corrects the bump steer and performs the toe alignment.

As illustrated in FIG. 5, the processor 110 reads the data that result from the measurements by the plurality of sensors and determines whether or not the bump steer occurs.

The steering angle sensor 141 measures the steering angle, the suspension deflection sensor 142 measures the deflection in the vertical direction of the suspension, particularly, of the front suspension, and the wheel angle sensors 143 measure the wheel angles, respectively, of the left-side wheel and the right-side wheel.

The wheel angle sensors 143 are provided on the left-side wheel and the right-side wheel, respectively, and measure the wheel angle of the left-side wheel and the wheel angle of the right-side wheel, respectively.

The data that result from the measurements by the plurality of sensors 140 are stored in the memory 120.

The processor 110 reads a suspension deflection Xd, a steering angle δsw, a left-side wheel angle δlw, a right-side wheel angle δrw, and a steering ratio i from 120 (S410).

The processor 110 compares the suspension deflection Xd with 0 and determines whether or not the suspension deflection Xd is 0 (S420). In a case where the suspension deflection Xd is 0, the processor 110 determines that the suspension does not move in the vertical direction. In a case where the suspension deflection Xd is not 0, the processor determines that the suspension moves in the vertical direction.

In a case where the suspension does not move, the processor 110 retrieves a value that results from the measurement by the sensor 140 and re-determines whether or not the suspension deflection Xd is 0. The processor 110 may determine the deflection of the suspension in real time and may compute the toe change.

In a case where the suspension moves, the processor 110 computes an estimated value δlwest of the left-side wheel angle and an estimated value δrwest of the right-side wheel angle by multiplying the steering angle δsw by the steering ratio (S430).

The processor 110 compares a left-side wheel angle δlw measured by the sensor with the estimated value δlwest of the left-side wheel angle and determines whether a right-side wheel angle δrw measured by the sensor is the same as the estimated value δrwest of the right-side wheel angle (S440).

In a case where the left-side wheel angle δlw is the same as the estimated value δlwest of the left-side wheel angle and where the right-side wheel angle δrw is the same as the estimated value δrwest of the right-side wheel angle, the processor 110 determines that the left-side and right-side wheel angles are normal and thus keeps the wheels turning without any correction or adjustment.

In a case where the left-side wheel angle δlw is not the same as the estimated value δlwest of the left-side wheel angle or where the right-side wheel angle δrw is not the same as the estimated value δrwest of the right-side wheel, the processor 110 computes the toe change (S450). At this point, the processor 110 determines the deflection of the suspension in real time and accordingly computes the toe change.

The processor 110 computes correction values δlwc and δrwc for correcting the wheel angles, in such a manner as to correspond to the changes, respectively, in the wheel angles due to the bump steer and correspondingly corrects the left-side wheel angle and the right-side wheel angle (S460).

The processor 110 transmits the corrected correction values to the actuators 150, respectively, on the left-side wheel and the right-side wheel, and the actuator 150 perform the toe alignment.

Therefore, the apparatus for and a method of controlling the steer-by-wire system according to the embodiment of the present disclosure are capable of eliminating the influence of the bump steer by computing the toe change on the basis of the deflection of the suspension and thus of correcting the bump steer.

Although exemplary embodiments of the disclosure have been disclosed for illustrative purposes, those skilled in the art will appreciate that various modifications, additions and substitutions are possible, within the scope of the invention as defined by the accompanying claims. Thus, the true technical scope of the disclosure should be defined by the following claims.

## Claims

1. An apparatus for controlling a steer-by-wire system, the apparatus comprising:
a steering angle sensor configured to measure a steering angle that is formed when operating a steering wheel;
wheel angle sensors installed on a left-side wheel and a right-side wheel, respectively, and configured to measure wheel angles, respectively;
a suspension deflection sensor configured to measure a movement in a vertical direction of a suspension; and
a processor configured to determine the movement of the suspension in a manner that corresponds to a value resulting from the measurement by the suspension deflection sensor, to determine toe changes to the left-side wheel and the right-side wheel on the basis of movements of the left-side wheel and the right-side wheel in a case where the movement of the suspension is determined, and to correct a left-side wheel angle and a right-side wheel angle,
wherein the processor compares the left-side wheel angle and the right-side wheel angle that are measured by the wheel angle sensors, respectively, with estimated values, respectively,
wherein the processor is configured to compute each of the estimated value of the left-side wheel angle and the estimated value of the right-side wheel angle by multiplying the steering angle measured by the steering angle sensor by a predetermined steering ratio,
wherein when the left-side wheel angle is consistent with the estimated value of the left-side wheel angle and the right-side wheel angle is consistent with the estimated value of the right-side wheel angle, the processor determines that the left-side and right-side wheel angles are normal, and
wherein when the left-side wheel angle is not consistent with the estimated value of the left-side wheel angle or the right-side wheel angle is not consistent with the estimated value of the right-side wheel angle, the processor corrects the toe changes.

2. The apparatus of claim 1, wherein the processor computes correction values for the left-side wheel angle and the right-side wheel angle in such a manner as to correspond to the toe changes, respectively, to the left-side wheel and the right-side wheel.

3. The apparatus of claim 2, wherein the processor transmits the correction values to actuators, respectively, on the left-side wheel and the right-side wheel, and the actuators perform the toe alignment.

4. A method of controlling a steer-by-wire system, the method comprising:
measuring, by a steering sensor, a steering angle that is formed when operating a steering wheel;
measuring, by wheel angle sensors installed on a left-side wheel and a right-side wheel, respectively, wheel angles, respectively;
measuring, by a suspension deflection sensor, a movement in a vertical direction of a suspension;
determining, by a processor, the movement of the suspension in a manner that corresponds to a value resulting from the measurement by the suspension deflection sensor;
determining, by the processor, toe changes to the left-side wheel and the right-side wheel on the basis of movements of the left-side wheel and the right-side wheel in a case where the movement of the suspension is determined; and
correcting, by the processor, a left-side wheel angle and a right-side wheel angle,
wherein in the determining by the processor of the toe changes to the left-side wheel and the right-side wheel, the processor compares the left-side wheel angle and the right-side wheel angle that are measured by the wheel angle sensors, respectively, with estimated values, respectively,
wherein in the correcting by the processor of the left-side wheel angle and the right-side wheel angle, the processor computes each of the estimated value of the left-side wheel angle and the estimated value of the right-side wheel angle by multiplying the steering angle measured by the steering angle sensor by a predetermined steering ratio,
wherein the correcting by the processor of the left-side wheel angle and the right-side wheel angle comprises:
determining, by the processor, that the left-side and right-side wheel angles are normal, when the left-side wheel angle is consistent with the estimated value of the left-side wheel angle and the right-side wheel angle is consistent with the estimated value of the right-side wheel angle; and
correcting, by the processor, the toe changes, in a case where the left-side wheel angle is not consistent with the estimated value of the left-side wheel angle or where the right-side wheel angle is not consistent with the estimated value of the right-side wheel angle.

5. The method of claim 4, wherein the correcting by the processor of the left-side wheel angle and the right-side wheel angle comprises:
computing, by the processor, correction values for the left-side wheel angle and the right-side wheel angle in such a manner as to correspond to the toe changes, respectively, to the left-side wheel and the right-side wheel.

6. The method of claim 5, wherein the correcting by the processor of the left-side wheel angle and the right-side wheel angle comprises:
transmitting, by the processor, the correction values to actuators, respectively, on the left-side wheel and the right-side wheel and performing, by the actuators, the toe alignment.

## Patentansprüche

1. Vorrichtung zur Steuerung eines Steer-by-Wire-Systems, wobei die Vorrichtung umfasst:
einen Lenkwinkelsensor, der dazu eingerichtet ist, einen Lenkwinkel zu messen, der beim Betätigen eines Lenkrads gebildet wird;
Radwinkelsensoren, die an einem linken bzw. einem rechten Rad installiert sind und zum Messen jeweiliger Radwinkel eingerichtet sind;
einen Aufhängungsauslenkungssensor, der dazu eingerichtet ist, eine Bewegung in einer vertikalen Richtung einer Aufhängung zu messen; und
einen Prozessor, der dazu eingerichtet ist, die Bewegung der Aufhängung in einer Weise zu bestimmen, die einem Wert entspricht, der sich aus der Messung durch den Aufhängungsauslenkungssensor ergibt, um Spuränderungen des linken Rads und des rechten Rads basierend auf Bewegungen des linken Rads und des rechten Rads in einem Fall zu bestimmen, in dem die Bewegung der Aufhängung bestimmt wird, und um einen linken Radwinkel und einen rechten Radwinkel zu korrigieren,
wobei der Prozessor den linken Radwinkel und den rechten Radwinkel, die von den jeweiligen Radwinkelsensoren gemessen werden, jeweils mit Schätzwerten vergleicht,
wobei der Prozessor dazu eingerichtet ist, sowohl den Schätzwert des linken Radwinkels als auch den Schätzwert des rechten Radwinkels zu berechnen, indem er den vom Lenkwinkelsensor gemessenen Lenkwinkel mit einem vorgegebenen Lenkverhältnis multipliziert,
wobei, wenn der linke Radwinkel mit dem Schätzwert des linken Radwinkels übereinstimmt und der rechte Radwinkel mit dem Schätzwert des rechten Radwinkels übereinstimmt, der Prozessor bestimmt, dass der linke Radwinkel und der rechte Radwinkel normal sind, und
wobei der Prozessor die Spuränderungen korrigiert, wenn der linke Radwinkel nicht mit dem Schätzwert des linken Radwinkels übereinstimmt oder der rechte Radwinkel nicht mit dem Schätzwert des rechten Radwinkels übereinstimmt.

2. Vorrichtung nach Anspruch 1, wobei der Prozessor Korrekturwerte für den linken Radwinkel und den rechten Radwinkel in einer Weise berechnet, dass sie den Spuränderungen des linken Rads bzw. des rechten Rads entsprechen.

3. Vorrichtung nach Anspruch 2, wobei der Prozessor die Korrekturwerte an Aktuatoren am linken Rad bzw. am rechten Rad überträgt und die Aktuatoren die Spureinstellung durchführen.

4. Verfahren zur Steuerung eines Steer-by-Wire-Systems, wobei das Verfahren umfasst:
Messen eines Lenkwinkels, der beim Betätigen eines Lenkrads gebildet wird, durch einen Lenkwinkelsensor;
Messen der Radwinkel durch Radwinkelsensoren, die jeweils an einem linken und einem rechten Rad installiert sind;
Messen einer Bewegung einer Aufhängung in einer vertikalen Richtung durch einen Aufhängungsauslenkungssensor;
Bestimmen der Bewegung der Aufhängung durch einen Prozessor in einer Weise, die einem Wert entspricht, der sich aus der Messung durch den Aufhängungsauslenkungssensor ergibt;
Bestimmen von Spuränderungen des linken und des rechten Rads durch den Prozessor basierend auf Bewegungen des linken und des rechten Rads in einem Fall, in dem die Bewegung der Aufhängung bestimmt wird; und
Korrigieren eines linken Radwinkels und eines rechten Radwinkels durch den Prozessor,
wobei, bei der Bestimmung der Spuränderungen des linken Rads und des rechten Rads durch den Prozessor, der Prozessor den linken Radwinkel und den rechten Radwinkel, die von den jeweiligen Radwinkelsensoren gemessen werden, jeweils mit Schätzwerten vergleicht,
wobei, bei der Korrektur des linken Radwinkels und des rechten Radwinkels durch den Prozessor, der Prozessor jeweils den Schätzwert des linken Radwinkels und den Schätzwert des rechten Radwinkels berechnet, indem er den vom Lenkwinkelsensor gemessenen Lenkwinkel mit einem vorgegebenen Lenkverhältnis multipliziert,
wobei die Korrektur des linken Radwinkels und des rechten Radwinkels durch den Prozessor umfasst:
Bestimmen durch den Prozessor, dass die linken und rechten Radwinkel normal sind, wenn der linke Radwinkel mit dem Schätzwert des linken Radwinkels übereinstimmt und der rechte Radwinkel mit dem Schätzwert des rechten Radwinkels übereinstimmt; und
Korrigieren der Spuränderungen durch den Prozessor in einem Fall, in dem der linke Radwinkel nicht mit dem Schätzwert des linken Radwinkels übereinstimmt oder in dem der rechte Radwinkel nicht mit dem Schätzwert des rechten Radwinkels übereinstimmt.

5. Verfahren nach Anspruch 4, wobei die Korrektur des linken Radwinkels und des rechten Radwinkels durch den Prozessor umfasst:
Berechnen von Korrekturwerten für den linken Radwinkel und den rechten Radwinkel durch den Prozessor in einer Weise, die den Spuränderungen des linken Rads bzw. des rechten Rads entspricht.

6. Verfahren nach Anspruch 5, wobei die Korrektur des linken Radwinkels und des rechten Radwinkels durch den Prozessor umfasst:
Übertragen der Korrekturwerte durch den Prozessor an Aktuatoren am linken Rad bzw. am rechten Rad und Durchführen der Spureinstellung durch die Aktuatoren.

## Revendications

1. Appareil de commande de direction à commande électrique, l'appareil comprenant:
un capteur d'angle de braquage conçu pour mesurer l'angle de braquage qui se forme lors de l'actionnement d'un volant;
des capteurs d'angle de roue installés respectivement sur une roue gauche et une roue droite, et conçus pour mesurer respectivement les angles de roue;
un capteur de déviation de suspension conçu pour mesurer un mouvement dans une direction verticale d'une suspension; et
un processeur configuré pour déterminer le mouvement de la suspension d'une manière qui correspond à une valeur obtenue suite à la mesure par le capteur de déviation de la suspension, pour déterminer les changements de pincement de la roue gauche et de la roue droite sur la base des mouvements de la roue gauche et de la roue droite dans le cas où le mouvement de la suspension est déterminé, et pour corriger l'angle de la roue gauche et l'angle de la roue droite,
dans lequel le processeur compare respectivement l'angle de la roue gauche et l'angle de la roue droite, qui sont mesurés respectivement par les capteurs d'angle de roue, avec des valeurs estimées,
dans lequel le processeur est configuré pour calculer chacune parmi la valeur estimée de l'angle de la roue gauche et la valeur estimée de l'angle de la roue droite en multipliant l'angle de braquage mesuré par le capteur d'angle de braquage par un rapport de braquage prédéterminé,
dans lequel, lorsque l'angle de la roue gauche correspond à la valeur estimée de l'angle de la roue gauche et que l'angle de la roue droite correspond à la valeur estimée de l'angle de la roue droite, le processeur détermine que les angles des roues gauche et droite sont normaux, et
dans lequel, lorsque l'angle de la roue gauche ne correspond pas à la valeur estimée de l'angle de la roue gauche ou lorsque l'angle de la roue droite ne correspond pas à la valeur estimée de l'angle de la roue droite, le processeur corrige les changements de pincement.

2. Appareil selon la revendication 1, dans lequel Le processeur calcule les valeurs de correction pour l'angle de la roue gauche et l'angle de la roue droite de manière à correspondre respectivement aux changements de pincement, de la roue gauche et de la roue droite.

3. Appareil selon la revendication 2, dans lequel le processeur transmet respectivement les valeurs de correction aux actionneurs sur la roue gauche et la roue droite, et les actionneurs effectuent l'alignement du pincement.

4. Procédé de commande de direction à commande électrique, le procédé comprenant:
la mesure, par un capteur de braquage, un angle de braquage qui se forme lors de l'actionnement d'un volant;
la mesure, par des capteurs d'angle de roue installés respectivement sur une roue gauche et une roue droite, des angles de roue;
la mesure, par un capteur de déviation de suspension, d'un mouvement dans la direction verticale d'une suspension;
la détermination, par un processeur, du mouvement de la suspension d'une manière qui correspond à une valeur obtenue par la mesure effectuée par le capteur de déviation de la suspension;
la détermination, par le processeur, des changements de pincement des roues gauche et droite sur la base des mouvements de la roue gauche et de la roue droite dans le cas où le mouvement de la suspension est déterminé; et
la correction, par le processeur, d'un angle de roue gauche et d'un angle de roue droite,
dans lequel, lors de la détermination par le processeur des changements de pincement de la roue gauche et de la roue droite, le processeur compare respectivement l'angle de roue gauche et l'angle de roue droite qui sont mesurés respectivement par les capteurs d'angle de roue, avec des valeurs estimées,
dans lequel lors de la correction par le processeur de l'angle de la roue gauche et de l'angle de la roue droite, le processeur calcule chacune parmi la valeur estimée de l'angle de roue gauche et la valeur estimée e l'angle de roue droite en multipliant l'angle de braquage mesuré par le capteur d'angle de braquage par un rapport de braquage prédéterminé,
dans lequel la correction, par le processeur, d'un angle de roue gauche et d'un angle de roue droite consiste à:
déterminer, par le processeur, que les angles des roues gauche et droite sont normaux, lorsque l'angle de la roue gauche correspond à la valeur estimée de l'angle de la roue gauche et que l'angle de la roue droite correspond à la valeur estimée de l'angle de la roue droite; et
corriger, par le processeur, les changement de pincement, lorsque l'angle de la roue gauche ne correspond pas à la valeur estimée de l'angle de la roue gauche ou lorsque l'angle de la roue droite ne correspond pas à la valeur estimée de l'angle de la roue droite.

5. Procédé selon la revendication 4, dans lequel la correction par le processeur de l'angle de la roue gauche et de l'angle de la roue droite consiste à:
calculer, par le processeur, les valeurs de correction pour l'angle de la roue gauche et l'angle de la roue droite de manière à correspondre respectivement aux changements de pincement, de la roue gauche et de la roue droite.

6. Procédé selon la revendication 5, dans lequel la correction par le processeur de l'angle de la roue gauche et de l'angle de la roue droite consiste à:
transmettre, par le processeur, respectivement les valeurs de correction aux actionneurs sur la roue gauche et la roue droite, et procéder à l'alignement du pincement en faisant appel aux actionneurs.
